(19) Europäisches Patentamt
European Patent Office
Office européen des brevets

(11) EP 2 378 634 A1

(12) **EUROPEAN PATENT APPLICATION**

(43) Date of publication:
19.10.2011 Bulletin 2011/42

(51) Int Cl.:
*H02K 1/27* (2006.01)

(21) Application number: 10159767.2

(22) Date of filing: 13.04.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicant: SIEMENS AKTIENGESELLSCHAFT
80333 München (DE)

(72) Inventor: Thomas, Arwyn
SY22 5HF Brithdir (GB)

(54) **Electrical machine and permanent-magnet**

(57)   The invention relates to an electrical machine, which contains permanent magnets and to the permanent magnets being used. The invention especially relates to a synchronous machine.

The magnet and the coil interact with the permanent magnet via an air gap, which is located between the permanent magnet and the coil.

The permanent magnet and the coil are arranged in a way that electrical power is generated in the coil when the permanent magnet or the coil is moved in their relative position to each other.

The permanent magnet contains a surface, which is aligned to the coil and to the air gap in a way, that magnetic forces of the permanent magnet interact via the surface and the air gap with the coil by a magnetic flux density distribution.

The cross sectional shape of this surface approximates at least partly to a sinusoidal-function.

FIG 2

EP 2 378 634 A1

**Description**

The invention relates to an electrical machine, which contains permanent magnets and to the permanent magnets being used. The invention especially relates to a synchronous machine.

An electrical machine like a generator contains a number of permanent magnets, which interact with at least one coil to generate electrical power. For the magnets used a compromise needs to be found. It is necessary to minimize or even avoid at least some of the following problems:

> First of all the magnetic force (magnetic field-strength) of the magnets will vary due to their individual characteristics and tolerances. Periodical torque pulsations will occur if the machine is within the status "no-load", "idling" or "full load".

Next the number and/or the size of used permanent magnets needs to be minimised due to the steadily increasing costs.

The torque stated above is denoted as "cogging torque" if the machine is in "no-load"-status, while it is denoted as "ripple torque" if the machine is "load"-status.

The torque pulsations may result in vibrations, which propagates inside the machine and within a used supporting structure of the machine also. The torque pulsations may harm mechanical and electrical components.

Furthermore the torque pulsations may generate acoustic noise with low frequencies. The frequencies are audible and thus disturb the environment, the human-beings and the wild-life.

Especially if a huge direct drive generator is within a wind turbine the disturbance needs to be reduced or even avoided.

Several techniques are known to reduce "cogging torque" or "ripple torque". For example the permanent magnets are shaped specifically or so called "dummy slots" are used inside the electrical machine.

The magnet shaping is advantageous for a given current and a required torque. The magnet shaping can be done in regard to minimize the amount of magnet material needed.

It is also possible to reduce cogging-torque and/or ripple-torque by an optimized shaping of the magnets.

A huge number of optimized magnet-shapes is known in the prior art.

An important and commonly applied one shows upper magnet corners, which are cut away. This is called chamfering. The chamfer angle used may be 45° but also alternative chamfer angles are known in the prior art. However this kind of chamfering does not reduce the cogging-torque and the ripple-torque to a satisfactory level.

Document EP 1 076 921 A1 describes a magnet piece with a cross sectional geometry. The geometry corresponds to the half-cycle arc of a sine curve. It is very difficult and expensive to manufacture this geometry. Even this approximation does not reduce the cogging-torque and the ripple-torque to a satisfactory level.

It is therefore the aim of the invention to provide an improved permanent magnet to address the problems mentioned above, and to provide an electrical machine, which contains this type of improved permanent magnet.

This aim is reached by the features of claim 1 and by the features of claim 9.

Preferred configurations are object of the dependent claims.

According to the invention the electrical machine contains a permanent magnet and a coil. The magnet and the coil interact with the permanent magnet via an air gap, which is located between the permanent magnet and the coil.

The permanent magnet and the coil are arranged in a way that electrical power is generated in the coil when the permanent magnet or the coil is moved in their relative position to each other.

The permanent magnet contains a surface, which is aligned to the coil and to the air gap in a way, that magnetic forces of the permanent magnet interact via the surface and the air gap with the coil by a magnetic flux density distribution.

The cross sectional shape of this surface approximates at least partly to a sinusoidal-function.

Preferably this function is used as sinusoidal-function:

$$(m*sin(theta)) + (h_m * w_{ft})).$$

The parameters used are defined as:

m — modulation index; 0 < m < 1: the modulation index is used to control an amplitude of the sin-function;

$w_{ft}$ — control-value; 0 < $w_{ft}$ < 1: this value is used to control a "flat top ratio"-width. The control-value is assigned to the axis where the sin-function oscillates and thus the width of the flat-top is controlled.

$h_m$ — total height of the magnet;

$m_w$ — width of the magnet; and

theta — angle, preferably set to π/2 for a half period of a sinusoid - other values might be chosen.

Due to these features a substantially sinusoidal flux density distribution in the air gap and across slots, being used to support the coil, is obtained.

According to the invention a level of modulation is achieved. The modulation level is varied by the parameter "m" as defined above. This allows modulation of the flux density distribution, even within the air gap.

The optimized shape of the magnet is modified by the factor "$h_m*w_{ft}$" as defined above. This leads to a flat top of the magnet, being aligned and adjacent to the air gap.

This flat top increases the flux density distribution asides the coil, as a longer part of the magnet surface is kept near to the stator relatively.

The magnet typically shows a rectangular area, which is located opposite to the shaped surface. The rectangular area results in a base-line within the cross-sectional view of the magnet.

For the surface-optimisation a number of system-parameters should be taken into account - the optimisation should be done in view of:

- a reduced magnet volume within the machine,
- a reduced cogging torque,
- reduced harmonics,
- an improved torque,
- an increased flux density,
- an increased efficiency of the machine, ..., etc.

Due to the function defined above the best compromise between magnet volume, machine efficiency, cogging torque, cogging ripple, demagnetization etc. can be found by an iterative adjustment of a few parameters only. The optimisation is thus fast and effective.

A number of design constraints are given usually due to the overall machine layout: size, magnet foot print, minimum air gap distance, torque, efficiency, ..., etc.

This number of constraints reduces the complexity of the iterative optimization, too.

The invention is applicable to radial, axial and linear magnetic geometries, even if the permanent magnet moves relative to a "slotted stator"-geometry, for example.

Thus a sinusoidal air gap flux density is provided, reducing the cogging forces between the stator and the magnet pole.

The invention is shown by help of some drawings now. The drawings show preferred configurations and do not limit the scope of the invention.

FIG 1    shows a cross-sectional view of a permanent magnet PM1, which is shaped according to the invention,

FIG 2    shows a perspective view of the permanent magnet PM1, referring also to FIG 1,

FIG 3    shows the permanent magnet of FIG 1 and FIG 2 with a sinusoidal-shaped surface, while

FIG 4    shows a method for the design and for the optimisation of the shaped surface according to the invention.

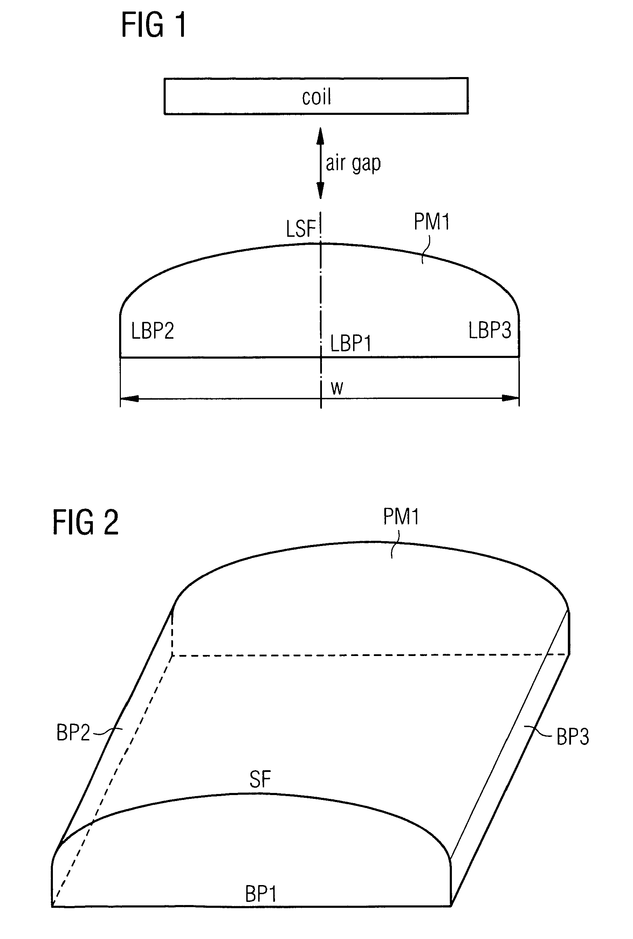

FIG 1 shows a cross-sectional view of a permanent magnet PM1, which is shaped according to the invention.

The cross section of the permanent magnet PM1 contains three linear sections LBP1, LBP2, LBP3. These sections LBP1, LBP2, LBP3 may belong to rectangular areas BP1, BP2, BP3 as shown in FIG 2 later.

The cross section of the permanent magnet PM1 contains also a line LSF. The line LSF is shaped in a way, that it approximates at least partly to a sinusoidal-function. It preferably approximates the function also defined above:

$$(m*\sin(theta)) + (h_m*w_{ft}).$$

The surface line LSF belongs to a shaped surface SF of the permanent magnet PM1 as shown in FIG 2 later.

The shaped surface (FIG2: SF) is aligned to a coil and to an air gap, which is between the permanent magnet PM1 and the coil.

FIG 2 shows a perspective view of the permanent magnet PM1, referring also to FIG 1.

Due to the shaped surface SF a smooth transition at the end points of the magnet PM1 near the base areas or base planes BP2 and BP3 is achieved.

The base planes BP2 and BP3 are orthogonal to the base plane BP1 of the permanent magnet PM1.

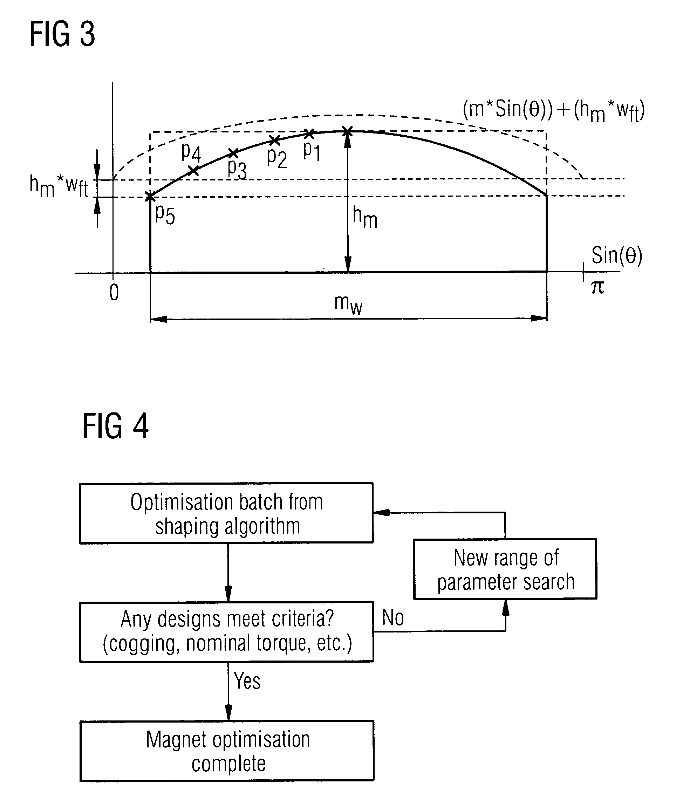

FIG 3 shows the permanent magnet of FIG 1 and FIG 2 with an optimized sinusoidal-shaped surface.

As defined above the sinusoidal-function is calculated preferably according to the function:

$$(m*\sin(theta)) + (h_m*w_{ft}).$$

The parameters are defined as:

m       modulation index; 0 < m < 1: the modulation index is used to control an amplitude of the sin-function;

$w_{ft}$    control-value; 0 < $w_{ft}$ < 1: this value is used to control a "flat top ratio"-width. The control-value is assigned to the axis where the sin-function oscillates and thus the width of the flat-top is controlled.

$h_m$     total height of the magnet;

$m_w$     width of the magnet; and

theta   angle, preferably set to n/2 for a half period of a sinusoid - other values might be chosen.

Due to these features a substantially sinusoidal flux density distribution in the air gap and across slots, being used to support the coil, is obtained.

According to the invention a level of modulation is achieved. The modulation level is varied by the parameter "m" as defined above.

This allows a modulation of the flux density distribution, even within the air gap.

The optimized shape of the magnet is modified by the factor "$h_m*w_{ft}$" as defined above.

This leads to a flat top of the magnet, being aligned and adjacent to the air gap.

This flat top increases the flux density distribution asides the coil, as a longer part of the magnet surface is kept near to the stator relatively.

A number of discrete points P1, P2, ..., P5 is determined. The points describe an approximation of a sinusoid.

The discrete points P1, ..., P5 provide a more simple optimized shape of the magnet surface SF, providing the coordinates for the surface geometry.

Preferably the shape of the magnet / surface is determined by help of a numerical design or iteration or by other analytical methods.

An optimized magnet shape is determined by an appropriate number of points, which are chosen for this.

The sinusoidal function might be approximated by typically 6 up to 10 points for the surface. Even the modulating function and the lifting are chosen by a numerical or iterative solution.

Preferably adjacent points are interconnected by linear segments. Thus a chamfered magnet surface is achieved.

This results in an easy process of magnet-manufacturing.

FIG 4 shows a simplified method for the design and for the optimisation of the shaped surface according to the invention.

The method comprises the steps of:

- define a number of discrete points to approximate the function as defined above,
- define the design criteria of the machine layout (such as magnet width $m_w$, torque of the machine, minimum air gap distance, cogging torque, ripple torque, ..., etc.
- run of an optimization algorithm to optimize the magnet shape (by iteratively adjusting at least the modulation function m and/or the lifting ($h_m*w_{ft}$) to find the magnet shape that meets all the criteria best.

## Claims

1. Electrical machine,

   - where the electrical machine contains a permanent magnet and a coil,
   - where the coil is arranged in a way, that it interacts with the permanent magnet via an air gap, which is located between the permanent magnet and the coil,
   - where the permanent magnet and the coil are arranged in a way that electrical power is generated in the coil when the permanent magnet or the coil is moved in their relative position to each other,
   - where the permanent magnet contains a surface, which is aligned to the coil and to the air gap in a way, that magnetic forces of the permanent magnet interact via the surface and the air gap with the coil by a magnetic flux density distribution, and
   - where the cross section of the surface is shaped in a way that it approximates at least partly to a sinusoidal-function, thus a substantially sinusoidal magnetic flux density distribution in the air gap is obtained.

2. Electrical machine according to claim 1, where the cross section of the surface is shaped to approximate the function

   $$(m*sin(theta)) + (h_m*w_{ft})),$$

   while:

   m is defined as modulation index with 0 < m < 1; while the modulation index is used to control an amplitude of the function;
   $w_{ft}$ is defined as control-value with 0 < $w_{ft}$ < 1, while this value is assigned to the axis where the sin-function oscillates and while the value is used to control the width of a flat-top of the permanent magnet, while the flat top is adjacent to the air gap;
   $h_m$ is defined as total height of the magnet;
   $m_w$ is defined as width of the magnet; and
   theta is defined as angle.

3. Electrical machine according to claim 1 or to claim 2, where the permanent magnet shows a rectangular area, which is opposite to the shaped surface.

4. Electrical machine according to claim 1, where the electrical machine is a synchronous machine or a radial flux machine or a linear flux machine or an axial flux machine.

5. Electrical machine according to claim 1, where the electrical machine is a generator of a wind turbine.

6. Electrical machine according to claim 1, where the cross section of the shaped surface is a line, which is defined by a number of points.

7. Electrical machine according to claim 6, where at least two of the points are interconnected by a linear segment.

8.  Electrical machine according to claim 1, where the shaped surface of the permanent magnet contains a flat top, which is adjacent to the air gap.

9.  Permanent-magnet, which is used inside a machine according to one of the claims 1 to 8,

> - where the permanent magnet contains a surface, which is designed in a way, that magnetic forces of the permanent magnet interact via the surface and an air gap with a coil by a magnetic flux density distribution, and
> - where the cross section of the surface is shaped in a way that it approximates at least partly to a sinusoidal-function, thus a substantially sinusoidal magnetic flux density distribution in the air gap is obtained.

10. Permanent-magnet according to claim 9, where the cross section of the surface is shaped to approximate the function

$$(m*sin(theta)) + (h_m*w_{ft})),$$

while:

> m is defined as modulation index with $0 < m < 1$; while the modulation index is used to control an amplitude of the function;
> $w_{ft}$ is defined as control-value with $0 < w_{ft} < 1$, while this value is assigned to the axis where the sin-function oscillates and while the value is used to control the width of a flat-top of the permanent magnet, while the flat top is adjacent to the air gap;
> $h_m$ is defined as total height of the magnet;
> $m_w$ is defined as width of the magnet; and
> theta is defined as angle.

## FIG 1

## FIG 2

## FIG 3

$$(m*\mathrm{Sin}(\theta)) + (h_m * w_{ft})$$

$h_m * w_{ft}$

$p_4$  $p_3$  $p_2$  $p_1$

$p_5$

$h_m$

$\mathrm{Sin}(\theta)$

0   $m_W$   $\pi$

## FIG 4

Optimisation batch from
shaping algorithm

Any designs meet criteria?
(cogging, nominal torque, etc.)

New range of
parameter search

No

Yes

Magnet optimisation
complete

Europäisches
Patentamt

European
Patent Office

Office européen
des brevets

# EUROPEAN SEARCH REPORT

Application Number

EP 10 15 9767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 076 921 A1 (PYRHOENEN JUHA [FI] SWITCH ELECTRICAL MACHINES OY [FI]) 21 February 2001 (2001-02-21) * paragraph [0032]; figure 7 * ----- | 1,9 | INV. H02K1/27 |
| X | JIBIN ZOU ET AL: "Optimum design of magnet shape in permanent-magnet synchronous motors" IEEE TRANSACTIONS ON MAGNETICS, IEEE SERVICE CENTER, NEW YORK, NY, US LNKD- DOI:10.1109/TMAG.2003.815543, vol. 39, no. 6, 1 November 2003 (2003-11-01), pages 3523-3526, XP011103987 ISSN: 0018-9464 * page 3525 - left-hand column, last paragraph; figure 4(a) * * page 3525 - right-hand column, paragraph first * * p. 3525, part. IV., A., figure 6(a) * ----- | 1-4,6-10 | |
| X | JP 1 234038 A (TOYOTA MOTOR CORP) 19 September 1989 (1989-09-19) * figures 1, 2, 4 * ----- | 1,3,4, 6-9 | TECHNICAL FIELDS SEARCHED (IPC) H02K |
| X | JP 6 217478 A (TOSHIBA CORP) 5 August 1994 (1994-08-05) * figures 1, 6, 7 * ----- | 1-4,9,10 | |
| X | WO 2010/009742 A1 (MULTIBRID GMBH [DE]; HEMEAD ELSAYED [DE]; LEHNHOFF MARTIN [DE]; SCHULZ) 28 January 2010 (2010-01-28) * page 3, lines 7-14 * * page 4, lines 9-17 * * figure 4 * * page 10, line 29 - page 11, line 5 * ----- -/-- | 1,5,9 | |

The present search report has been drawn up for all claims

| Place of search | Date of completion of the search | Examiner |
|---|---|---|
| Berlin | 6 October 2010 | Czogalla, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 10 15 9767

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | US 6 753 632 B1 (HARTSFIELD JR RICHARD E [US]) 22 June 2004 (2004-06-22) * the whole document * ----- | 1-10 | |

TECHNICAL FIELDS
SEARCHED        (IPC)

The present search report has been drawn up for all claims

| Place of search | Date of completion of the search | Examiner |
|---|---|---|
| Berlin | 6 October 2010 | Czogalla, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 15 9767

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2010

| Patent document cited in search report | | Publication date | Patent family member(s) | | Publication date |
|---|---|---|---|---|---|
| EP 1076921 | A1 | 21-02-2001 | AU<br>CA<br>FI<br>WO<br>JP | 4041999 A<br>2331835 A1<br>981022 A<br>9959233 A1<br>2002515720 T | 29-11-1999<br>18-11-1999<br>09-11-1999<br>18-11-1999<br>28-05-2002 |
| JP 1234038 | A | 19-09-1989 | JP | 2615779 B2 | 04-06-1997 |
| JP 6217478 | A | 05-08-1994 | NONE | | |
| WO 2010009742 | A1 | 28-01-2010 | NONE | | |
| US 6753632 | B1 | 22-06-2004 | CN<br>EP<br>JP<br>KR<br>US<br>WO | 2884661 Y<br>1584129 A1<br>2006515740 T<br>20050084515 A<br>2005040722 A1<br>2004064226 A1 | 28-03-2007<br>12-10-2005<br>01-06-2006<br>26-08-2005<br>24-02-2005<br>29-07-2004 |

EPO FORM P0459

For more details about this annex : see Official Journal of the European Patent Office, No. 12/82

EP 2 378 634 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1076921 A1